# FASCICULE DE BREVET EUROPEEN

(11) **EP 3 721 152 B1**
(45) Date de publication et mention de la délivrance du brevet: **02.02.2022**
(21) Numéro de dépôt: 18830907.4
(22) Date de dépôt: 03.12.2018
(51) Int. Cl.: F25B 17/08, F25B 17/10, F25B 15/04, F25B 15/06, F25B 15/00

(54) **POMPE À CHALEUR THERMOCHIMIQUE ET PROCÉDÉ DE REDISTRIBUTION D'ÉNERGIE CALORIFIQUE À PUISSANCE VARIABLE**
THERMOCHEMISCHE WÄRMEPUMPE UND VERFAHREN ZUR UMVERTEILUNG VON VARIABLER KALORISCHER ENERGIE
THERMOCHEMICAL HEAT PUMP AND METHOD FOR REDISTRIBUTION OF VARIABLE POWER CALORIFIC ENERGY

(30) Priorité: 04.12.2017 FR 1761608
(43) Date de publication de la demande: 14.10.2020
(73) Titulaire: Faure, Jean-Emmanuel, 31100 Toulouse (FR)
(72) Inventeur: Faure, Jean-Emmanuel, 31100 Toulouse (FR)
(74) Mandataire: BARRE LAFORGUE
(86) Numéro de dépôt international: PCT/FR2018/053076
(87) Numéro de publication internationale: WO 2019/110897

(56) Documents cités:
- FR-A- 1 367 790
- FR-A1- 2 679 632
- US-A- 2 452 635

## Description

L'invention concerne une pompe à chaleur thermochimique, notamment pour la redistribution d'énergie calorifique stockée par voie thermochimique. Elle s'étend en particulier à un procédé de redistribution d'énergie calorifique mis en œuvre dans une telle pompe à chaleur thermochimique.

La récupération et le stockage d'énergie calorifique par voie thermochimique présente un grand intérêt et a fait l'objet de très nombreuses recherches et propositions, par exemple pour l'exploitation de la chaleur, dite chaleur fatale, nécessairement produite mais perdue sur des sites industriels et des sites de production de chaleur réseau de chauffage urbain, ou pour l'utilisation intersaisonnière d'énergie solaire thermique (cf. par exemple la thèse « Étude du stockage à long terme de l'énergie solaire thermique par procédé d'absorption LiBr-H2O pour le chauffage de l'habitat » N'Tsoukpoe, Université de Grenoble 19 mars 2012).

Une pompe à chaleur thermochimique connue comprend typiquement un évaporateur de solvant volatile comprenant un échangeur de chaleur, dit échangeur d'évaporateur associé thermiquement à une source chaude, et un dispositif réactionnel adapté pour entraîner une condensation de la vapeur du solvant volatile et une absorption d'une composition saline d'au moins un sel par le solvant liquide volatile ainsi formé par condensation de façon à former une solution liquide, dite solution primaire, avec production de chaleur évacuée vers une source froide par un échangeur de chaleur associé thermiquement à une source froide. Une telle pompe à chaleur thermochimique permet d'absorber des calories de la source chaude (notamment pour la refroidir) et/ou de délivrer des calories à la source froide (notamment pour la réchauffer). Elle peut donc servir aussi bien pour le chauffage d'un local ou d'un fluide que pour le refroidissement d'un local ou d'un fluide. Le document US2452635A divulgue une pompe à chaleur thermochimique. Un procédé de redistribution d'énergie calorifique stockée par voie thermochimique est connu par le document FR1367790A.

Comme l'indique la thèse susmentionnée, le choix de chaque sel de la composition saline et du solvant liquide sont particulièrement délicats et complexes. En outre, un des problèmes qui se posent avec une telle pompe à chaleur est celui de permettre sa bonne adaptation aux besoins de l'utilisation, et ce aussi bien pour son utilisation pour le chauffage de la source froide que pour son utilisation pour le refroidissement de la charge chaude. En particulier, la pompe à chaleur thermochimique doit être suffisamment performante pour procurer le chauffage ou le refroidissement requis, mais également doit pouvoir faire l'objet d'une variation de la puissance thermique délivrée en fonction des besoins de l'utilisation.

L'invention vise à résoudre ce problème général.

Pour ce faire, elle concerne une pompe à chaleur thermochimique selon la revendication 1, la pompe à chaleur comprenant :
- un évaporateur, dit évaporateur de solvant, comprenant :
   o un réservoir de solvant liquide volatile,
   o un échangeur de chaleur, dit échangeur d'évaporateur, adapté pour pouvoir être associé thermiquement à une source thermique, dite source chaude, ledit échangeur d'évaporateur comprenant un circuit présentant une entrée de solvant liquide volatile reliée au réservoir de solvant liquide volatile,
   o une sortie de vapeur du solvant volatile, ledit évaporateur de solvant étant adapté pour pouvoir délivrer une vapeur du solvant volatile vaporisé sous l'effet de calories provenant de ladite source chaude,
- un dispositif réactionnel comprenant :
   o une entrée de vapeur du solvant volatile,
   o au moins une source d'une composition, dite composition saline, contenant au moins un sel soluble dans ledit solvant liquide volatile,
   o au moins un échangeur de chaleur, dit échangeur de refroidissement, adapté pour pouvoir être associé thermiquement à une source thermique, dite source froide,
- ladite sortie de vapeur de l'évaporateur de solvant étant reliée à ladite entrée de vapeur du dispositif réactionnel,
- le dispositif réactionnel étant adapté pour entraîner une condensation de ladite vapeur du solvant volatile et une absorption de ladite composition saline pour former une solution liquide, avec production de chaleur évacuée vers la source froide par ledit échangeur de refroidissement, ledit dispositif réactionnel comprenant :
- au moins un réacteur, dit réacteur de condensation, comprenant :
   ∘ une entrée de solution liquide reliée à une sortie de solution liquide froide dudit échangeur de refroidissement,
   ∘ une entrée de vapeur du solvant volatile,
   ∘ une sortie de solution liquide reliée à une entrée de solution liquide chaude dudit échangeur de refroidissement,
   ∘ ce réacteur de condensation étant adapté pour permettre un contact de la vapeur alimentée par ladite entrée de vapeur avec la solution liquide froide délivrée à ladite entrée de solution liquide, de façon à entraîner une condensation de ladite vapeur et un mélange du solvant liquide volatile ainsi formé par condensation avec ladite solution liquide froide, la solution liquide chaude délivrée à la sortie de solution liquide du réacteur de condensation résultant de ce mélange,
- au moins une injection de composition saline entre ladite sortie de solution liquide et ladite entrée de solution liquide d'au moins un -notamment de chaque-réacteur de condensation,
- un dispositif d'ajustement du débit massique de chaque sel introduit dans la solution liquide par au moins une injection de composition saline entre ladite sortie de solution liquide et ladite entrée de solution liquide d'au moins un réacteur de condensation.

L'utilisation d'un tel réacteur de condensation à recirculation de solution liquide avec injection de composition saline et ajustement du débit massique de chaque sel introduit par cette injection permet un ajustement simple de la concentration de fonctionnement de la solution liquide formée par le dispositif réactionnel. Or, l'inventeur a déterminé que cette concentration impose le différentiel de température théorique entre la température d'évaporation du solvant et la température de la solution liquide chaude à la sortie du réacteur de condensation, ce différentiel de température théorique étant un facteur influençant la puissance thermique délivrée par la pompe à chaleur. Plus particulièrement, le différentiel de température théorique pouvant être obtenu entre l'évaporateur de solvant et le réacteur de condensation dépend en particulier du choix du solvant liquide, de chaque sel de la composition saline, et de cette concentration de fonctionnement.

En particulier, le différentiel de température théorique maximum est lui-même déterminé par la concentration maximum possible de la solution liquide, qui dépend du choix de chaque sel de la composition saline et du solvant liquide. Dans une pompe à chaleur thermochimique selon l'invention, il suffit donc de choisir la composition saline et de solvant liquide pour obtenir une concentration maximale déterminant un différentiel de température théorique maximum suffisant pour les besoins maximaux de puissance thermique de l'utilisation. Dans cette plage maximale, la puissance thermique délivrée par la pompe à chaleur selon l'invention peut être ajustée simplement en fonctionnement par ajustement du débit massique de chaque sel résultant d'une injection de composition saline entre la sortie et l'entrée d'au moins un réacteur de condensation.

Une pompe à chaleur selon l'invention peut comporter un seul échangeur de refroidissement associé thermiquement à une seule source froide, ou plusieurs échangeurs de chaleur associés thermiquement à plusieurs sources froides distinctes.

Une pompe à chaleur selon l'invention peut comporter un seul réacteur de condensation, ou une pluralité de réacteurs de condensation distincts, par exemple agencés en parallèle ou en cascade.

Une pompe à chaleur selon l'invention peut comporter une unique injection de composition saline entre la sortie et l'entrée de chaque réacteur de condensation, ou une pluralité d'injections distinctes d'une même composition saline ou de compositions salines distinctes entre la sortie et l'entrée de chaque réacteur de condensation.

Une pompe à chaleur thermochimique selon l'invention peut comporter une seule source de composition saline, ou une pluralité de sources distinctes d'une même composition saline, ou encore une pluralité de sources distinctes d'une pluralité de compositions salines distinctes (les différentes compositions salines se différenciant les unes des autres par la nature d'au moins un sel et/ou sa proportion).

Toute forme de réalisation de source de composition saline peut être envisagée dans une pompe à chaleur selon l'invention. Cela étant, dans certains modes de réalisation avantageux, une pompe à chaleur thermochimique selon l'invention comprend, à titre de source de composition saline, au moins un réacteur de solubilisation adapté pour permettre la solubilisation d'au moins un -notamment de chaque- sel solide de ladite composition saline dans une solution liquide insaturée dudit solvant liquide, ce réacteur de solubilisation comprenant au moins une sortie délivrant un débit de solution liquide concentrée formant ladite composition saline. Ainsi, dans ces modes de réalisation, la composition saline est formée au sein même de la pompe à chaleur selon l'invention à partir d'au moins un sel solide. Une pompe à chaleur selon l'invention peut comporter un seul réacteur de solubilisation -notamment lorsque la composition saline comporte un unique sel- ; ou plusieurs réacteurs de solubilisation, par exemple pour solubiliser plusieurs sels distincts et/ou selon des concentrations distinctes et/ou à partir de solutions liquides insaturées distinctes.

L'utilisation d'un tel réacteur de solubilisation est particulièrement avantageuse dans le cas où la pompe à chaleur thermochimique selon l'invention est utilisée pour la redistribution d'une énergie calorifique préalablement récupérée par voie thermochimique par dissociation d'une solution liquide d'au moins un sel sous la forme d'une composition solide d'au moins un sel et du solvant liquide volatile. En effet, il suffit alors de placer la composition solide dans un réacteur de solubilisation et le solvant liquide dans l'évaporateur de solvant pour redistribuer à la source froide et/ou à la source chaude l'énergie calorifique ainsi stockée sous forme thermochimique.

Dans certains modes de réalisation avantageux d'une pompe à chaleur selon l'invention au moins un -notamment chaque- réacteur de solubilisation est adapté pour délivrer la composition saline sous forme d'une solution liquide saturée.

En outre, dans certains modes de réalisation avantageux conformes à l'invention au moins une injection de composition saline est reliée -notamment par une conduite- à au moins une sortie d'un réacteur de condensation. Plus particulièrement, dans certains modes de réalisation particuliers, ladite injection de composition saline est formée par une conduite d'injection reliant au moins une sortie d'un réacteur de solubilisation à une conduite, dite conduite commune, reliée à ladite sortie de solution liquide d'un réacteur de condensation. Rien n'empêche en variante ou en combinaison de prévoir une injection de composition saline à l'amont de ladite entrée de solution liquide d'un réacteur de condensation.

Une pompe à chaleur selon l'invention comporte avantageusement au moins une pompe pour l'entraînement des solutions liquides. En particulier, dans certains modes de réalisation avantageux selon l'invention ladite conduite commune comprend une pompe à l'aval de ladite injection de composition saline. Cette pompe permet donc d'entraîner le mélange formé dans ladite conduite commune par la composition saline en provenance du réacteur de solubilisation avec la solution liquide en provenance du réacteur de condensation.

Dans certains modes de réalisation particulièrement avantageux d'une pompe à chaleur thermochimique selon l'invention au moins un -notamment chaque- réacteur de solubilisation comprend une entrée de solution liquide insaturée reliée par une conduite d'alimentation à ladite conduite commune, ladite conduite d'alimentation comprenant une vanne commandée d'ajustement du débit de solution liquide insaturée délivré à cette entrée du réacteur de solubilisation. Ainsi, la composition saline est formée d'une solution liquide concentrée obtenue par dissolution d'au moins un sel solide dans une fraction du débit de solution liquide diluée prélevée en sortie d'un réacteur de condensation. En outre, de préférence, la conduite d'alimentation du réacteur de solubilisation est reliée à la conduite commune à l'aval de ladite pompe. Ainsi, cette pompe permet également d'alimenter le réacteur de solubilisation, ce qui permet d'éviter de multiplier de telles pompes, dont le coût est relativement important compte tenu des propriétés corrosives des solutions salines Selon l'invention, ledit dispositif d'ajustement est adapté pour commander chaque vanne commandée de la conduite d'alimentation d'un réacteur de solubilisation, c'est-à-dire que cet ajustement du débit massique de chaque sel introduit dans la solution liquide entre la sortie et l'entrée d'un réacteur de condensation s'effectue par ajustement du débit de solution liquide insaturée alimentée à l'entrée d'un réacteur de solubilisation.

Le dispositif d'ajustement d'une pompe à chaleur selon l'invention peut faire l'objet de toutes variantes. Il peut s'agir en particulier d'un dispositif d'ajustement manuel, avec ou sans assistance informatique, ou au contraire de préférence d'un dispositif d'ajustement automatique à partir d'au moins une valeur de consigne définie par l'utilisateur. Ce dispositif d'ajustement peut donc en particulier comporter au moins un asservissement en boucle fermée ou en boucle ouverte, par exemple au moins un régulateur proportionnel et/ou un régulateur proportionnel-dérivée et/ou un régulateur proportionnel-intégral et/ou un régulateur proportionnel-intégral-dérivée (PID) ou autre.

En particulier, dans certains modes de réalisation avantageux d'une pompe à chaleur thermochimique selon l'invention, le dispositif d'ajustement comprend au moins un asservissement adapté pour délivrer un signal de commande en fonction d'au moins une valeur de température mesurée au sein de la pompe à chaleur thermochimique.

Dans certains modes de réalisation avantageux, une pompe à chaleur thermochimique selon l'invention comprend un capteur de température de ladite solution liquide froide en sortie de chaque échangeur de refroidissement et en ce que le dispositif d'ajustement est adapté pour asservir le débit délivré par la vanne commandée de la conduite d'alimentation d'au moins un réacteur de solubilisation en fonction de la température de ladite solution liquide froide mesurée par au moins un tel capteur de température. Ainsi, l'ajustement du débit massique de sel introduit qui permet d'ajuster la concentration de fonctionnement peut être effectué sans mesure ni connaissance de la valeur réelle de cette concentration de fonctionnement, uniquement par un asservissement d'un débit délivré par une vanne commandée d'une conduite d'alimentation d'au moins un réacteur de solubilisation (qui détermine le débit de composition saline injectée à partir de ce réacteur de solubilisation) sur la température mesurée à la sortie de l'échangeur de refroidissement. Ainsi, si la température mesurée à la sortie de l'échangeur de refroidissement est trop faible, l'asservissement ouvre la vanne commandée pour augmenter le débit de composition saline introduit dans la solution liquide. Au contraire, si la température mesurée à la sortie d'échangeur de refroidissement est trop élevée, l'asservissement ferme la vanne commandée pour diminuer le débit de composition saline introduit dans la solution liquide. Un tel asservissement sur la vanne commandée d'une conduite d'alimentation d'un réacteur de solubilisation permet donc d'ajuster simplement le différentiel de température théorique de la pompe à chaleur selon l'invention.

Par ailleurs, dans certains modes de réalisation d'une pompe à chaleur selon l'invention, la conduite commune est reliée à l'entrée de solution liquide chaude de chaque échangeur de refroidissement par une conduite de recirculation comprenant une vanne commandée d'ajustement du débit de solution liquide chaude délivré à cet échangeur de refroidissement, et donc du débit de solution liquide froide délivré à l'entrée de chaque réacteur de condensation reliée à la sortie de solution liquide de cet échangeur de refroidissement. En outre, de préférence, ladite conduite de recirculation est reliée à la conduite commune à l'aval de ladite pompe. Ainsi, cette pompe permet également d'alimenter chaque échangeur de refroidissement, ce qui permet d'éviter de multiplier de telles pompes, dont le coût est relativement important compte tenu des propriétés corrosives des solutions salines.

Une telle vanne commandée d'une conduite de recirculation permet ainsi d'ajuster le débit global de la solution liquide circulant à travers chaque réacteur de condensation, et donc la puissance thermique délivrée par la pompe à chaleur selon l'invention. Cet ajustement peut être réalisé entièrement manuellement, ou au contraire par un automatisme comprenant au moins un asservissement sur une valeur de consigne définie par l'utilisateur, par exemple par un dispositif thermostatique de la source chaude et/ou de la source froide.

L'invention s'applique à une pompe à chaleur thermochimique de toute nature, dont les conditions générales de fonctionnement peut faire l'objet de nombreuses variantes en fonction des applications et du choix du solvant liquide et de chaque sel de la composition saline. Cela étant, dans certains modes de réalisation conformes à l'invention chaque évaporateur, le dispositif réactionnel, chaque conduite dans laquelle circule de la vapeur et chaque conduite dans laquelle circule une solution liquide, sont en dépression sous vide de tiers gaz. En particulier, chaque évaporateur, chaque réacteur de condensation, chaque conduite reliant un évaporateur à un réacteur de condensation, chaque réacteur de solubilisation et chaque autre conduite dans laquelle circule une solution liquide, sont en dépression sous vide de tiers gaz. Une telle mise en œuvre en dépression sous vide de tiers gaz permet en particulier de réaliser l'évaporation à faible température.

Comme indiqué ci-dessus, une pompe à chaleur thermochimique selon l'invention peut être utilisée avec tout solvant liquide volatile et toute composition saline, selon les applications et les besoins. Cela étant, dans certains modes de réalisation avantageux, ledit solvant liquide volatile est l'eau et en ce que ladite composition saline comprend au moins un sel choisi dans le groupe formé de ZnCl₂, NaOH, LiBr, ZnBr₂, KOH, LiCl, CaBr₂, LiI, CaCl₂, MgCl₂, NaI, Ca(NO₃)₂, Mg(NO₃)₂, NaBr, NH₄NO₃, KI, SrCl₂, NaNO₃, NaCl, KCH₃CO₂, K₂CO₃, MnCl₂, NaNO₂.

L'invention concerne une pompe à chaleur thermochimique comprenant :
- un évaporateur, dit évaporateur de solvant, comprenant :
   ∘ un réservoir de solvant liquide volatile,
   ∘ un échangeur de chaleur, dit échangeur d'évaporateur, adapté pour pouvoir être associé thermiquement à une source thermique, dite source chaude, ledit échangeur d'évaporateur comprenant un circuit présentant une entrée de solvant liquide volatile reliée au réservoir de solvant liquide volatile,
   ∘ une sortie de vapeur du solvant volatile, ledit évaporateur de solvant étant adapté pour pouvoir délivrer une vapeur du solvant volatile vaporisé sous l'effet de calories provenant de ladite source chaude,
- un échangeur de chaleur, dit échangeur de refroidissement, adapté pour pouvoir être associé thermiquement à une source thermique, dite source froide,
- un réacteur de condensation comprenant :
   ∘ une entrée de solution liquide reliée à une sortie de solution liquide froide dudit échangeur de refroidissement,
   ∘ une entrée de vapeur du solvant volatile,
   ∘ une sortie de solution liquide reliée à une entrée de solution liquide chaude dudit échangeur de refroidissement,
- une conduite reliant ladite sortie de vapeur de l'évaporateur de solvant à ladite entrée de vapeur du réacteur de condensation,
- le réacteur de condensation étant adapté pour permettre un contact de la vapeur alimentée par ladite entrée de vapeur avec la solution liquide froide délivrée à ladite entrée de solution liquide du réacteur de condensation, de façon à entraîner une condensation de ladite vapeur et un mélange du solvant liquide volatile ainsi formé par condensation avec ladite solution liquide froide, la solution liquide chaude délivrée à la sortie de solution liquide du réacteur de condensation résultant de ce mélange,
- au moins une source d'une composition, dite composition saline, contenant au moins un sel soluble dans ledit solvant liquide volatile,
- au moins une injection de composition saline entre ladite sortie de solution liquide et ladite entrée de solution liquide du réacteur de condensation,
- un dispositif d'ajustement du débit massique de composition saline injectée entre ladite sortie de solution liquide et ladite entrée de solution liquide du réacteur de condensation.

L'invention s'étend également à un procédé mis en œuvre dans une pompe à chaleur thermochimique selon l'invention.

Elle concerne donc un procédé selon la revendication 13 de redistribution d'énergie calorifique stockée par voie thermochimique, le procédé comprenant :
- une évaporation d'un solvant liquide volatile, par échange de chaleur avec une source thermique, dite source chaude,
- une réaction comprenant une condensation de ladite vapeur du solvant volatile et une absorption d'une composition saline pour former une solution liquide, avec production de chaleur évacuée par échange de chaleur vers une source thermique, dite source froide, réaction étant effectuée dans au moins un réacteur, dit réacteur de condensation, et comprend :
- l'alimentation d'une entrée de solution liquide du réacteur de condensation par une solution liquide froide en provenance d'un échangeur de refroidissement adapté pour pouvoir être associé thermiquement à ladite source froide,
- l'alimentation du réacteur de condensation par une vapeur du solvant volatile résultant de ladite évaporation,
- l'alimentation dudit échangeur de refroidissement par une solution liquide chaude délivrée par une sortie de solution liquide du réacteur de condensation,
- un contact de la vapeur alimentée dans le réacteur de condensation avec la solution liquide froide alimentée dans le réacteur de condensation, de façon à entraîner une condensation de ladite vapeur et un mélange du solvant liquide volatile ainsi formé par condensation avec ladite solution liquide froide, la solution liquide chaude délivrée par le réacteur de condensation résultant de ce mélange,
- l'injection d'au moins une composition saline entre ladite sortie de solution liquide et ladite entrée de solution liquide d'au moins un -notamment de chaque-réacteur de condensation,
- un ajustement du débit massique de chaque sel introduit dans la solution liquide par injection de composition saline entre ladite sortie de solution liquide et ladite entrée de solution liquide d'au moins un - notamment de chaque- réacteur de condensation.

En particulier, dans certains modes de réalisation d'un procédé selon l'invention, ledit ajustement comprend un asservissement du débit massique sur au moins une température mesurée -notamment une température mesurée de la solution liquide froide alimentée dans le réacteur de condensation-.

En outre, dans certains modes de réalisation d'un procédé selon l'invention, ladite composition saline est formée par solubilisation d'au moins un sel solide dans une fraction du débit de solution liquide comprenant la solution liquide délivrée par au moins un -notamment par chaque- réacteur de condensation. La composition saline est alors une solution liquide concentrée, notamment à saturation.

Dans certains modes de réalisation d'un procédé selon l'invention, ledit ajustement comprend alors un asservissement du débit injecté de composition saline. Rien n'empêche, en variante ou en combinaison, de réaliser l'ajustement par asservissement de la concentration de la composition saline injectée.

L'invention concerne également une pompe à chaleur thermochimique adaptée pour la mise en œuvre d'un procédé de redistribution d'énergie calorifique selon l'invention.

D'autres buts et avantages de l'invention apparaîtront à la lecture de la description suivante donnée à titre non limitatif et qui se réfère aux figures annexées dans lesquelles :
- la figure 1 est un schéma représentant un premier mode de réalisation possible d'une pompe à chaleur thermochimique selon l'invention,
- la figure 2 est un diagramme de Othmer des solutions aqueuses de soude,
- la figure 3 est un schéma représentant un deuxième mode de réalisation possible d'une pompe à chaleur thermochimique selon l'invention,
- la figure 4 est un schéma représentant la pompe à chaleur de la figure 3 dans un état différent.

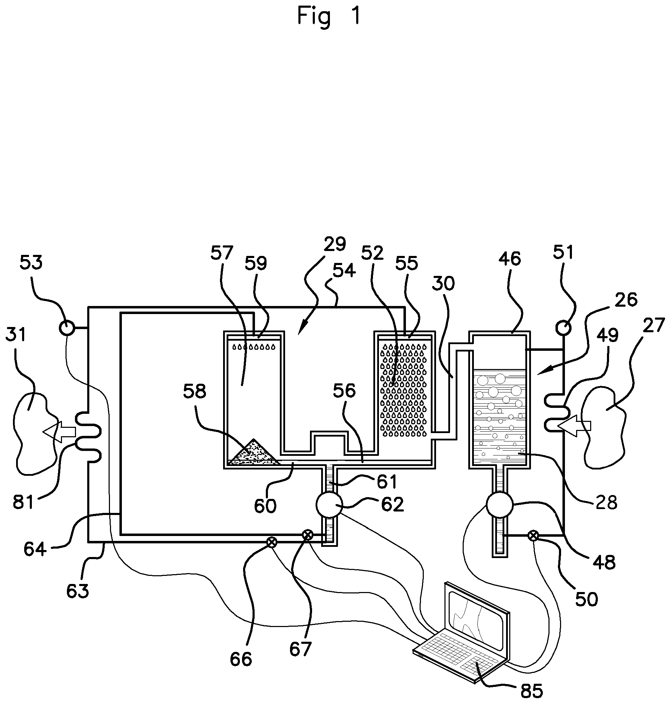

La pompe à chaleur 15 thermochimique selon l'invention représentée figure 1 comprend :
- un évaporateur, dit évaporateur 26 de solvant, en dépression sous vide de tiers gaz dans lequel un solvant liquide pur 28 (par exemple apporté par un véhicule en provenance d'un site de récupération) est alimenté, cet évaporateur 26 de solvant étant associé thermiquement à un milieu froid 27 faisant office de source chaude de façon à permettre une absorption, par l'évaporateur 26 de solvant, de chaleur puisée sur cette source chaude 27 permettant l'évaporation du solvant liquide 28 dans l'évaporateur 26 de solvant ;
- un dispositif 29 réactionnel en dépression sous vide de tiers gaz relié à la sortie de l'évaporateur 26 de solvant par une conduite 30 en dépression sous vide de tiers gaz de façon à recevoir la vapeur produite par l'évaporateur 26 de solvant ; ce dispositif 29 réactionnel est alimenté par une quantité de composition solide d'au moins un sel (par exemple apportée par le véhicule en provenance du site de récupération simultanément au solvant liquide pur) ; le dispositif 29 réactionnel est adapté pour permettre d'une part la condensation du solvant liquide, et sa mise au contact d'au moins une partie de ladite quantité de composition solide ainsi que la dissolution de chaque sel dans le solvant liquide d'une solution liquide insaturée pour former une solution liquide à une concentration totale Cf.

Le dispositif 29 réactionnel est associé thermiquement à un milieu chaud 31 faisant office de source froide de façon à permettre un transfert de calories vers cette source froide sous l'effet de la production de chaud résultant d'une part de la condensation de la vapeur, d'autre part de la dissolution de la composition solide dans le solvant liquide.

Une telle pompe à chaleur 15 permet ainsi de refroidir la source chaude 27 et/ou de réchauffer la source froide 31 du fait de la formation de la solution par dissolution de ladite composition solide d'au moins un sel dans le liquide formant solvant pour cette composition solide.

L'évaporateur 26 de solvant comprend un réservoir 46 clos contenant le solvant liquide pur à évaporer, dont le fond est en communication avec une conduite 47 dotée d'une pompe 48 et d'une vanne 50 proportionnelle commandée permettant d'extraire le liquide du réservoir 46 pour le faire passer dans un échangeur de chaleur, dit échangeur 49 d'évaporateur, associé à la source chaude 27, qui est à une température supérieure à celle du solvant liquide pur extrait du réservoir 46. En conséquence, le solvant liquide se vaporise au moins partiellement dans l'évaporateur 26 de solvant sous l'effet des calories absorbées par l'échangeur 49 d'évaporateur, dont la sortie est reliée en partie supérieure du réservoir 46, au-dessus du niveau du solvant liquide dans le réservoir 46, cette partie supérieure du réservoir 46 recevant le solvant ainsi vaporisé. Un capteur 51 de température permet de mesurer la température de la vapeur du solvant liquide à la sortie de l'échangeur 49 d'évaporateur.

Le dispositif 29 réactionnel comprend un réacteur 52 de condensation sous forme d'une enceinte close reliée à la partie supérieure du réservoir 46 de l'évaporateur 26 de solvant par la conduite 30 de façon à pouvoir être alimentée par la vapeur du solvant à partir de l'évaporateur 26. La partie supérieure du réacteur 52 de condensation comprend un dispositif 55 de ruissellement relié à une conduite 54 d'alimentation en solution liquide. Ce dispositif 55 de ruissellement permet de créer un film tombant de la solution liquide à l'intérieur du réacteur 52 de condensation, au contact de la vapeur du solvant, entraînant de ce fait une condensation de cette vapeur, et son mélange avec la solution liquide, avec production de chaleur. Dans la partie inférieure du réacteur 52 de condensation, la solution liquide est donc à une moindre concentration et à une température plus élevée que la solution liquide à l'entrée du réacteur 52 de condensation. La solution liquide est extraite du réacteur 52 par une conduite 56.

Le dispositif 29 réactionnel comporte également un réacteur 57 de solubilisation qui est également sous forme d'une enceinte close et est adapté pour pouvoir être alimenté par des cristaux d'au moins un sel solide 58, par exemple disposés sur un tamis horizontal et/ou dans une matrice textile. Ce réacteur 57 de solubilisation comprend également en partie supérieure une alimentation 59 en solution liquide permettant l'écoulement de cette solution liquide au contact des cristaux de sel solide 58, et la solubilisation de ces derniers dans la solution liquide. Après solubilisation et production de chaleur, la solution liquide concentrée à la saturation est extraite en partie inférieure du réacteur 57 de solubilisation par une conduite 60.

Les conduites 56 et 60 délivrant les solutions liquides en provenance respectivement des réacteurs 52 de condensation et 57 de solubilisation se rejoignent dans une conduite 61 commune dans laquelle les solutions liquides se mélangent, à l'entrée d'une pompe 62.

Une première conduite 63 comprenant une vanne 66 proportionnelle commandée relie la sortie de la pompe 62 à un échangeur de chaleur, dit échangeur 81 de refroidissement, associé à la source froide 31 permettant un transfert de calories depuis la solution liquide délivrée par la pompe 62 vers la source froide 31, la sortie de cet échangeur 81 de chaleur délivrant une solution liquide refroidie. Cette solution liquide refroidie est alimentée dans le réacteur 52 de condensation par une conduite 54 qui relie la sortie de l'échangeur 81 de chaleur au réacteur 52 de condensation. Un capteur de température 53 permet de mesurer la température de la solution liquide circulant dans la conduite 54 entre l'échangeur 81 et le réacteur 52 de condensation.

Une deuxième conduite 64 comprenant une vanne 67 proportionnelle commandée relie la sortie de la pompe 62 à l'alimentation 59 du réacteur 57 de solubilisation.

Au fur et à mesure de l'évaporation du solvant prélevé du réservoir 46 de l'évaporateur 26 de solvant, le dispositif 29 réactionnel produit dans la conduite 61 commune un volume de solution liquide, dite solution primaire, à la concentration totale Cf de fonctionnement. Cette solution primaire peut être réutilisée dans une phase ultérieure de récupération d'énergie calorifique, par exemple après transport sur un site de récupération de chaleur fatale (chaleur nécessairement produite sur un site industriel et normalement perdue). Cette solution primaire peut être délivrée dans un réservoir de stockage (non représenté figure 1) alimenté en fonction de sa production à partir de la conduite 61 commune. En variante, il est possible de prélever la solution liquide en sortie du réacteur 52 de condensation pour la stocker dans un réservoir de stockage en vue de son utilisation ultérieure.

Un automate qui, dans l'exemple représenté, est un dispositif informatique 85, est relié aux capteurs de température 51, 53 pour en recevoir les signaux de mesure et aux vannes 66, 67 pour pouvoir les commander, cet automate 85 étant programmé selon un asservissement.

La commande de la vanne 67 permet d'ajuster le débit massique de composition saline introduit dans la solution liquide par la conduite 60 en sortie du réacteur 57 de solubilisation, et donc la concentration totale Cf de fonctionnement de la pompe à chaleur. Cette concentration totale Cf détermine le différentiel théorique de température procuré par la solution liquide.

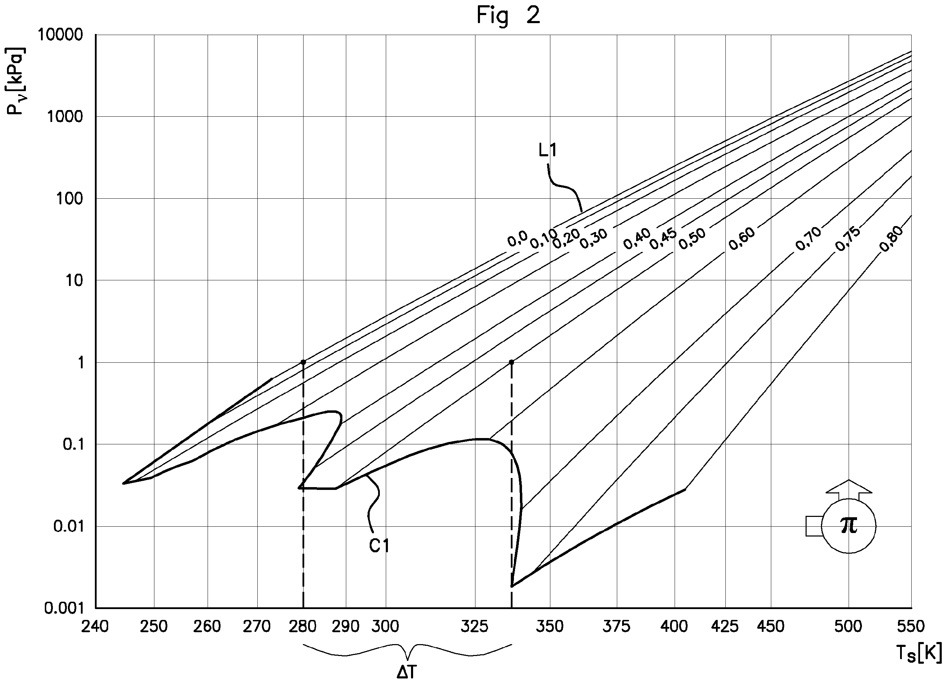

La figure 2 représente un diagramme de Othmer du logarithme de la pression de vapeur en fonction de la température des solutions aqueuses de soude. La courbe CI est la courbe de cristallisation. Les différentes lignes qui s'étendent à partir de cette courbe de cristallisation correspondent aux différentes concentrations massiques des solutions aqueuses de soude, la ligne L1 située le plus à gauche correspondant à l'eau pure. Comme on le voit par exemple, par rapport à de l'eau pure à 280 K (7°C), le différentiel théorique de température ΔT présenté par une solution aqueuse de soude à 50 % est de 335 K -280 K = 55 K. Ce différentiel théorique de température est de 120 K pour une solution aqueuse de soude à 70 %. Ainsi, avec la soude, il est possible d'obtenir un différentiel théorique de température important.

Si la pompe à chaleur est utilisée pour le chauffage de la source froide 31 à une température de consigne prédéterminée, la température de la source chaude 27 et celle du solvant dans l'évaporateur 26 sont prédéterminées (ou considérées comme tels) et la valeur du différentiel théorique de température détermine la température de la solution liquide à la sortie du réacteur 52 de condensation, et donc la température de la solution liquide à l'entrée de l'échangeur 81 de refroidissement.

À débit constant, en augmentant cette température de la solution liquide à l'entrée de l'échangeur 81 de refroidissement, on augmente la puissance thermique fournie à la source froide 31. La température mesurée par le capteur 53 à la sortie d'échangeur 81 de refroidissement est représentative, à un coefficient d'efficacité de l'échangeur 81 de refroidissement près, de la température de la source froide 31. Si cette température mesurée est inférieure à la température de consigne, l'automate 85 augmente l'ouverture de la vanne 67 pour augmenter le débit massique de composition saline injectée, et donc la température de la solution liquide à l'entrée de l'échangeur 81 de refroidissement. Si au contraire la température mesurée est supérieure à la température de consigne, l'automate 85 diminue l'ouverture de la vanne 67 pour diminuer le débit massique de composition saline injectée, et donc la température de la solution liquide à l'entrée de l'échangeur 81 de refroidissement.

La loi de commande utilisée pour l'augmentation ou la diminution de l'ouverture de la vanne 67 en fonction de la différence entre la température mesurée par le capteur 53 et la température de consigne peut faire l'objet de toutes variantes appropriées : il peut s'agir en particulier d'une loi de commande proportionnelle et/ou proportionnelle-dérivée et/ou proportionnelle-intégrale et/ou proportionnelle-intégrale-dérivée (PID) ou autre.

Il est à noter que l'échangeur 81 de refroidissement comprenant un circuit secondaire associé thermiquement à la source froide 31 isolé du circuit principal de cet échangeur 81 faisant partie de la pompe à chaleur, le capteur 53 de température peut être remplacé par un capteur de température à la sortie de ce circuit secondaire de façon à procurer un ajustement plus précis vis-à-vis de la température de consigne de la source froide 31.

Il est par ailleurs à noter que la température de la solution liquide à l'entrée de l'échangeur 81 de refroidissement doit être supérieure à la température de consigne à laquelle la source froide 31 doit être portée. Il convient donc à ce titre de choisir la composition saline pour permettre de respecter cette condition. En particulier, l'utilisation de la soude permet en pratique de satisfaire cette condition par simple asservissement sur la température mesurée par le capteur 53, puisque, comme indiqué ci-dessus, le différentiel théorique de température pouvant être obtenu avec la soude peut être très important et aller jusqu'à 150° C.

La commande de la vanne 66 permet d'ajuster le débit de solution liquide en recirculation dans le réacteur 52 de condensation. De préférence, la vanne 66 est en conditions normales de fonctionnement, ouverte au maximum. Néanmoins, si la puissance requise diminue, il est possible de fermer la vanne 66 pour diminuer instantanément la puissance thermique fournie par la pompe à chaleur.

L'automate est également relié aux pompes 62, 48 et programmé pour en commander la mise en fonctionnement ou l'arrêt, et à la vanne 50 permettant d'ajuster le débit de solvant liquide évaporé dans l'évaporateur 26.

Si la pompe à chaleur est utilisée pour le refroidissement de la source chaude 27 à une température de consigne prédéterminée, la température de la source froide 31 et celle de la solution liquide à la sortie du réacteur 52 de condensation sont prédéterminées (ou considérées comme tels) et la valeur du différentiel théorique de température détermine la température du solvant liquide dans l'évaporateur 26 à l'entrée de l'échangeur 49 d'évaporateur.

À débit constant, en diminuant cette température du solvant liquide à l'entrée de l'échangeur 49 d'évaporateur, on augmente la puissance thermique fournie par la source chaude 27 à l'échangeur 49 d'évaporateur. Si la température de la vapeur à la sortie de l'échangeur 49 d'évaporateur mesurée par le capteur 51 est inférieure à la température de consigne, l'automate 85 diminue l'ouverture de la vanne 67 pour diminuer le débit massique de composition saline injectée, et donc augmenter la température du solvant liquide à l'entrée de l'échangeur 49 d'évaporateur. Si au contraire la température mesurée par le capteur 51 est supérieure à la température de consigne, l'automate 85 augmente l'ouverture de la vanne 67 pour augmenter le débit massique de composition saline injectée, et donc diminuer la température du solvant liquide à l'entrée de l'échangeur 49 d'évaporateur.

La loi de commande utilisée pour l'augmentation ou la diminution de l'ouverture de la vanne 67 en fonction de la différence entre la température mesurée par le capteur 51 et la température de consigne peut faire l'objet de toutes variantes appropriées : il peut s'agir en particulier d'une loi de commande proportionnelle et/ou proportionnelle-dérivée et/ou proportionnelle-intégrale et/ou proportionnelle-intégrale-dérivée (PID) ou autre.

Il est par ailleurs à noter que la température du solvant liquide à l'entrée de l'échangeur 49 d'évaporateur doit être inférieure à la température de consigne à laquelle la source chaude 27 doit être portée. Il convient donc à ce titre de choisir la composition saline pour permettre de respecter cette condition. En particulier, l'utilisation de la soude permet en pratique de satisfaire cette condition par simple asservissement sur la température mesurée par le capteur 51, puisque, comme indiqué ci-dessus, le différentiel théorique de température pouvant être obtenu avec la soude peut être très important et aller jusqu'à 150° C.

La commande de la vanne 50 à l'entrée de l'échangeur 49 d'évaporateur permet d'ajuster le débit de solvant liquide en circulation dans cet échangeur 49 d'évaporateur. De préférence, la vanne 50 est en conditions normales de fonctionnement, ouverte au maximum. Néanmoins, si la puissance requise diminue, il est possible de fermer la vanne 50 pour diminuer instantanément la puissance thermique fournie par la pompe à chaleur.

Comme précédemment indiqué en ce qui concerne la source froide 31, le capteur 51 de température peut être remplacé ou complété par un capteur de température à la sortie du circuit secondaire de l'échangeur 49 d'évaporateur et/ou par un capteur de température de la source chaude 27.

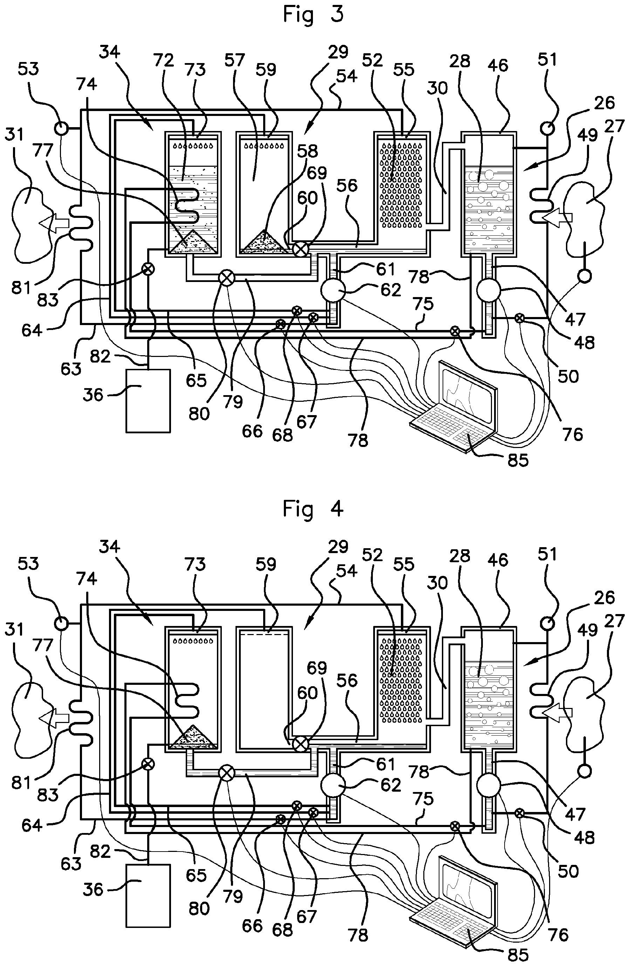

Dans le mode de réalisation représentée sur les figures 3 et 4 la solution primaire délivrée par le dispositif 29 réactionnel est ensuite soumise à une étape de séparation partielle lors de laquelle elle est partiellement déconcentrée. Pour ce faire, la solution primaire est alimentée à l'entrée d'un dispositif 34 de recristallisation en dépression sous vide de tiers gaz comprenant un dispositif d'échange de chaleur associé à l'évaporateur 26 de façon à refroidir la solution primaire par le froid produit par l'évaporateur 26 à une température suffisamment basse pour entraîner une recristallisation partielle d'au moins un sel contenu dans la solution primaire.

Le dispositif 34 de recristallisation produit d'une part une solution liquide, dite solution déconcentrée, ayant une concentration totale Cd non nulle inférieure à Cf, et qui peut être stockée par exemple dans un réservoir 36 en dépression sous vide de tiers gaz ; d'autre part une quantité de composition solide d'au moins un sel, dite composition 77 recristallisée.

La composition 77 recristallisée peut être recyclée dans le dispositif 29 réactionnel pour former la solution primaire.

Comme on le voit, le dispositif 29 réactionnel fonctionne avec une concentration totale Cf qui est celle de la solution primaire 32 produite, qui définit la différence de température maximale qui peut être produite entre le dispositif 29 réactionnel et l'évaporateur 26, et donc entre les sources 27 chaude et 31 froide.

En revanche, si la composition 77 recristallisée ne contient pas de solvant, la solution déconcentrée contient la même quantité de solvant liquide que la solution primaire mais est à une concentration Cd inférieure à Cf.

Le dispositif 29 réactionnel comprend ainsi également un réacteur 72 de recristallisation partielle, sous forme d'une enceinte close, qui comprend un échangeur 74 de chaleur comprenant un circuit froid alimenté en solvant liquide froid par une conduite 75 reliée à l'aval de la pompe 48 de sortie de l'évaporateur 26 par l'intermédiaire d'une vanne proportionnelle commandée 76. Après passage dans ce circuit froid dans lequel il se réchauffe, le solvant liquide est recyclé dans le réservoir 46 de l'évaporateur 26 par une conduite 78. Le réacteur 72 de recristallisation partielle comprend également en partie supérieure une alimentation 73 en solution liquide permettant l'écoulement de cette solution liquide au contact de l'échangeur 74 de chaleur (ou dans le circuit chaud de ce dernier), ce par quoi cette solution liquide se refroidit à une température suffisamment basse pour recristalliser partiellement. Les cristaux 77 ainsi formés sont récupérés en partie inférieure du réacteur 72 de recristallisation partielle, par exemple sur un tamis ou dans une matrice textile de ce dernier. La solution liquide déconcentrée ainsi formée dans le réacteur 72 de recristallisation partielle est extraite en partie inférieure de ce dernier par la conduite 82 comprenant une vanne commandée 83, cette conduite 82 débouchant dans le réservoir 36 dans lequel la solution liquide déconcentrée est stockée.

Une conduite 79 comprenant une vanne proportionnelle commandée 80 relie également la partie inférieure du réacteur 72 de recristallisation partielle à l'aval de la vanne 69 de sortie du réacteur 57 de solubilisation ou à la conduite 61 commune à l'amont de la pompe 62, de sorte que la solution liquide issue du réacteur 72 de recristallisation partielle peut être mélangée à la solution liquide issue du réacteur 52 de condensation.

La conduite 60 reliant le réacteur 57 de solubilisation à la conduite 61 commune comprend une vanne 69 proportionnelle commandée. Une troisième conduite 65 comprenant une vanne 68 proportionnelle d'alimentation relie la sortie de la pompe 62 à l'alimentation 73 du réacteur 72 de recristallisation partielle.

L'automate 85 permet de réguler la température de cristallisation dans le réacteur 72 de recristallisation partielle par ajustement du débit de solvant liquide alimenté dans l'échangeur 74 de chaleur en commandant le degré d'ouverture de la vanne 76 en fonction de la température mesurée dans le réacteur 72 de recristallisation partielle grâce à un capteur de température (non représenté) dont les signaux sont délivrés à l'automate 85.

L'automate 85 permet également de réguler le niveau de solution liquide dans le dispositif 29 réactionnel en fonction de l'apport de solvant liquide issu de l'évaporateur 26, par contrôle du débit d'alimentation du réacteur 72 de recristallisation partielle en commandant le degré d'ouverture de la vanne 68 d'alimentation. Pour ce faire, il est prévu avantageusement au moins un capteur de niveau (non représenté) de la solution liquide dans le dispositif 29 réactionnel, automate 85 recevant les signaux délivrés par chaque capteur de niveau et étant adapté pour maintenir le niveau de liquide.

Dans l'état représenté figure 3, la station permet la solubilisation progressive des cristaux 58 qui correspondent par exemple à une composition apportée par véhicule, dans la quantité de solvant liquide pur correspondant par exemple à une quantité apportée par véhicule, incorporée dans le réservoir 46 de l'évaporateur 26. L'évaporation du solvant liquide dans l'évaporateur 26 produit du froid utilisé dans l'échangeur 74 pour recristalliser partiellement au moins une partie de la solution liquide dans le réacteur 72 de recristallisation partielle qui produit une solution déconcentrée qui s'accumule, ainsi que les cristaux 77 d'au moins un sel solide ainsi formés, dans le réacteur 72 de recristallisation partielle. Le volume de la solution liquide alimentée dans le réacteur 72 de recristallisation partielle correspond par exemple avantageusement au volume de solvant liquide réintroduit par le réacteur 52 de condensation à partir de l'évaporateur 26.

Dans cet état, les vannes 50, 66, 67, 68, 69, 76 sont ouvertes et la vanne 80 est fermée. La solution liquide formée dans la conduite commune 61 est la solution primaire qui présente une concentration Cf dont la valeur dépend de l'état respectif des vannes 66 et 67 permettant de réguler les débits délivrés respectivement au réacteur 52 de condensation et au réacteur 57 de solubilisation, et donc la puissance thermique délivrée, en fonction de la demande de la source chaude 27 et/ou de la source froide 31.

Une fois que l'intégralité des cristaux 58 ont été solubilisés dans le réacteur 57 de solubilisation et/ou que le réacteur 52 de recristallisation partielle a atteint sa capacité maximale en solution déconcentrée, cette dernière est évacuée dans le réservoir 36 par la conduite 82 par ouverture de la vanne commandée 83.

Dans l'état représenté figure 4, la conduite commune 61 est alimentée non pas à partir du réacteur 57 de solubilisation, mais à partir du réacteur 72 de recristallisation partielle qui fait alors office de réacteur de solubilisation. Dans cet état, la vanne 69 est fermée et la vanne 80 est ouverte. La solution liquide formée dans la conduite commune 61 est la solution primaire dont la concentration Cf dépend de l'état respectif des vannes 66 et 68 permettant de réguler les débits délivrés respectivement au réacteur 52 de condensation et au réacteur 72 de recristallisation partielle. Ainsi, les cristaux 77 formés lors de la recristallisation partielle peuvent être recyclés immédiatement pour former la solution primaire, jusqu'à épuisement de ces cristaux 77.

Les différents réacteurs 52, 57, 72, le réservoir 46 de l'évaporateur, les échangeurs de chaleur 49, 81, le réservoir 36 de stockage de la solution déconcentrée et des différentes conduites qui les relient les uns aux autres sont en dépression sous vide de tiers gaz, c'est-à-dire sont en communication (selon l'état des vannes commandées) pour former une même enceinte close de laquelle tous les gaz présents avant mise en fonctionnement de l'installation sont évacués par une pompe à vide (non représenté).

Dans le mode de réalisation de la figure 3, l'automate 85 est également relié à la vanne 68 de façon à permettre un ajustement du débit de solution liquide alimentée à l'entrée du réacteur 72 de recristallisation partielle, et à la vanne 76 permettant d'ajuster le débit de solvant liquide permettant le refroidissement du réacteur 72 de recristallisation partielle. L'automate 85 est également relié aux vannes 69, 80 permettant le changement d'état de la pompe à chaleur de l'état représenté figure 3 à l'état représenté figure 4 et vice versa.

Les différentes vannes commandées peuvent être par exemple des électrovannes proportionnelles commandées par un automatisme programmé notamment comme indiqué ci-dessus pour réaliser les fonctions techniques mentionnées ci-dessus, notamment selon des asservissements appropriés en boucle fermée ou non, à partir de capteurs de mesure, notamment de capteurs de température et/ou thermostats et/ou de capteurs de niveau de liquide dans les réservoirs ou réacteurs et/ou de capteurs de détection de la présence de composition solide dans les réacteurs ou autres.

L'invention peut faire l'objet de nombreuses variantes et applications autres que celles décrites ci-dessus. En particulier, il va de soi que, sauf indication contraire explicite, les différentes caractéristiques structurelles et/ou fonctionnelles de chacun des modes de réalisation décrits ci-dessus ne doivent pas être considérées comme combinées et/ou étroitement liées les unes aux autres, mais au contraire comme de simples juxtapositions. En outre, les caractéristiques structurelles ou fonctionnelles des différents modes de réalisation décrits ci-dessus peuvent faire l'objet en tout ou partie de toute juxtaposition différente ou de toute combinaison différente.

Par exemple, l'ajustement du débit massique de composition saline injectée peut être réalisé entièrement manuellement en agissant sur la vanne 67 d'alimentation du réacteur 57 de solubilisation ; la pompe à chaleur peut être placée non pas en dépression sous vide de tiers gaz, mais à une pression supérieure, en contenant un gaz neutre tel que de l'air ou autre, si cette pression est compatible avec les phénomènes d'évaporation mis en jeu, compte tenu des caractéristiques thermiques des sources de chaleur associées aux évaporateurs. En outre, les différents dispositifs de condensation, solubilisation, d'échange calorifique... peuvent faire l'objet de toutes variantes structurelles et optimisations bien connues en elles-mêmes du génie chimique, de façon à exercer leurs fonctions techniques mentionnées ci-dessus.

La conduite d'alimentation du réacteur 57 de solubilisation peut être reliée non pas à la conduite 61 commune, mais à la sortie d'échangeur 81 de refroidissement de façon à être alimentée par la solution liquide refroidie. La vanne 67 correspondante est alors placée à l'aval de l'échangeur 81 de refroidissement. De même, la conduite d'alimentation du réacteur 72 de recristallisation peut être reliée non pas à la conduite 61 commune, mais à la sortie d'échangeur 81 de refroidissement de façon à être alimentée par la solution liquide refroidie. La vanne 68 correspondante est alors placée à l'aval de l'échangeur 81 de refroidissement.

## Revendications

1. - Pompe à chaleur thermochimique comprenant :
- un évaporateur, dit évaporateur (26) de solvant, comprenant :
o un réservoir (46) de solvant liquide volatile,
o un échangeur de chaleur, dit échangeur (49) d'évaporateur, adapté pour pouvoir être associé thermiquement à une source thermique, dite source (27) chaude, ledit échangeur d'évaporateur comprenant un circuit présentant une entrée de solvant liquide volatile reliée au réservoir de solvant liquide volatile,
o une sortie de vapeur du solvant volatile, ledit évaporateur (26) de solvant étant adapté pour pouvoir délivrer une vapeur du solvant volatile vaporisé sous l'effet de calories provenant de ladite source chaude,
- un dispositif (29) réactionnel comprenant :
o une entrée de vapeur du solvant volatile,
o au moins une source d'une composition, dite composition saline, contenant au moins un sel soluble dans ledit solvant liquide volatile,
o au moins un échangeur de chaleur, dit échangeur (81) de refroidissement, adapté pour pouvoir être associé thermiquement à une source thermique, dite source (31) froide,
- ladite sortie de vapeur de l'évaporateur (26) de solvant étant reliée à ladite entrée de vapeur du dispositif (29) réactionnel,
- le dispositif (29) réactionnel étant adapté pour entraîner une condensation de ladite vapeur du solvant volatile et une absorption de ladite composition saline pour former une solution liquide, avec production de chaleur évacuée vers la source (31) froide par ledit échangeur (81) de refroidissement, dispositif (29) réactionnel comprenant :
- au moins un réacteur, dit réacteur (52) de condensation, comprenant :
o une entrée de solution liquide reliée à une sortie de solution liquide froide dudit échangeur de refroidissement,
o une entrée de vapeur du solvant volatile,
o une sortie de solution liquide reliée à une entrée de solution liquide chaude dudit échangeur (81) de refroidissement,
o ce réacteur (52) de condensation étant adapté pour permettre un contact de la vapeur alimentée par ladite entrée de vapeur avec la solution liquide froide délivrée à ladite entrée de solution liquide, de façon à entraîner une condensation de ladite vapeur et un mélange du solvant liquide volatile ainsi formé par condensation avec ladite solution liquide froide, la solution liquide chaude délivrée à la sortie de solution liquide du réacteur (52) de condensation résultant de ce mélange,
- au moins une injection de composition saline entre ladite sortie de solution liquide et ladite entrée de solution liquide d'au moins un réacteur (52) de condensation,
- un dispositif (67, 85) d'ajustement du débit massique de chaque sel introduit dans la solution liquide par au moins une injection de composition saline entre ladite sortie de solution liquide et ladite entrée de solution liquide d'au moins un réacteur (52) de condensation.

2. - Pompe à chaleur thermochimique selon la revendication 1 **caractérisée en ce qu'**elle comprend, à titre de source de composition saline, au moins un réacteur (57) de solubilisation adapté pour permettre la solubilisation d'au moins un sel solide de ladite composition saline dans une solution liquide insaturée dudit solvant liquide, ce réacteur (57) de solubilisation comprenant au moins une sortie délivrant un débit de solution liquide concentrée formant ladite composition saline.

3. - Pompe à chaleur thermochimique selon l'une quelconque des revendications 1 ou 2 **caractérisée en ce qu'**au moins une injection de composition saline est reliée à au moins une sortie d'un réacteur (52) de condensation.

4. - Pompe à chaleur thermochimique selon les revendications 2 et 3 **caractérisée en ce que** ladite injection de composition saline est formée par une conduite (60) d'injection reliant au moins une sortie d'un réacteur (57) de solubilisation à une conduite, dite conduite (61) commune, reliée à ladite sortie de solution liquide d'un réacteur (52) de condensation.

5. - Pompe à chaleur thermochimique selon la revendication 4 **caractérisée en ce que** ladite conduite (61) commune comprend une pompe (62) à l'aval de ladite injection de composition saline.

6. - Pompe à chaleur thermochimique selon l'une quelconque des revendications 4 ou 5 **caractérisée en ce qu'**au moins un réacteur (57) de solubilisation comprend une entrée de solution liquide insaturée reliée par une conduite (64) d'alimentation à ladite conduite (61) commune, ladite conduite (64) d'alimentation comprenant une vanne commandée d'ajustement du débit de solution liquide insaturée délivré à cette entrée du réacteur (57) de solubilisation.

7. - Pompe à chaleur thermochimique selon les revendications 5 et 6 **caractérisée en ce que** la conduite (64) d'alimentation du réacteur de solubilisation est reliée à la conduite (61) commune à l'aval de ladite pompe (62).

8. - Pompe à chaleur thermochimique selon l'une quelconque des revendications 6 ou 7 **caractérisée en ce qu'**elle comprend un capteur (53) de température de ladite solution liquide froide en sortie de chaque échangeur (81) de refroidissement et **en ce que** le dispositif (67, 85) d'ajustement est adapté pour asservir le débit délivré par la vanne (67) commandée de la conduite (64) d'alimentation d'au moins un réacteur (57) de solubilisation en fonction de la température de ladite solution liquide froide mesurée par au moins un tel capteur (53) de température.

9. - Pompe à chaleur thermochimique selon l'une des revendications 4 à 8 **caractérisée en ce que** la conduite (61) commune est reliée à l'entrée de solution liquide chaude de chaque échangeur (81) de refroidissement par une conduite (63) de recirculation comprenant une vanne (66) commandée d'ajustement du débit de solution liquide chaude délivré à cet échangeur (81) de refroidissement, et donc du débit de solution liquide froide délivré à l'entrée de chaque réacteur (52) de condensation reliée à la sortie de solution liquide de cet échangeur de refroidissement.

10. - Pompe à chaleur thermochimique selon les revendications 5 et 9 **caractérisée en ce que** ladite conduite (63) de recirculation est reliée à la conduite (61) commune à l'aval de ladite pompe (62).

11. - Pompe à chaleur thermochimique selon l'une des revendications 1 à 10 **caractérisée en ce que** chaque évaporateur, le dispositif (29) réactionnel, chaque conduite dans laquelle circule de la vapeur et chaque conduite dans laquelle circule une solution liquide, sont en dépression sous vide de tiers gaz.

12. - Pompe à chaleur thermochimique selon l'une des revendications 1 à 11 **caractérisée en ce que** ledit solvant liquide volatile est l'eau et **en ce que** ladite composition saline comprend au moins un sel choisi dans le groupe formé de ZnCl₂, NaOH, LiBr, ZnBr₂, KOH, LiCl, CaBr₂, LiI, CaCl₂, MgCl₂, NaI, Ca(NO₃)₂, Mg(NO₃)₂, NaBr, NH₄No₃, KI, SrCl₂, NaNO₃, NaCl, KCH₃CO₂, K₂CO₃, MnCl₂, NaNO₂.

13. - Procédé de redistribution d'énergie calorifique stockée par voie thermochimique comprenant :
- une évaporation d'un solvant liquide volatile, par échange de chaleur avec une source thermique, dite source (27) chaude,
- une réaction comprenant une condensation de ladite vapeur du solvant volatile et une absorption d'une composition saline pour former une solution liquide, avec production de chaleur évacuée par échange de chaleur vers une source thermique, dite source (31) froide, la réaction étant effectuée dans au moins un réacteur, dit réacteur (52) de condensation, et comprend :
- l'alimentation d'une entrée de solution liquide du réacteur (52) de condensation par une solution liquide froide en provenance d'un échangeur (81) de refroidissement adapté pour pouvoir être associé thermiquement à ladite source (31) froide,
- l'alimentation du réacteur (52) de condensation par une vapeur du solvant volatile résultant de ladite évaporation,
- l'alimentation dudit échangeur (81) de refroidissement par une solution liquide chaude délivrée par une sortie de solution liquide du réacteur (52) de condensation,
- un contact de la vapeur alimentée dans le réacteur (52) de condensation avec la solution liquide froide alimentée dans le réacteur (52) de condensation, de façon à entraîner une condensation de ladite vapeur et un mélange du solvant liquide volatile ainsi formé par condensation avec ladite solution liquide froide, la solution liquide chaude délivrée par le réacteur de condensation résultant de ce mélange,
- l'injection d'au moins une composition saline entre ladite sortie de solution liquide et ladite entrée de solution liquide d'au moins un réacteur (52) de condensation,
- un ajustement du débit massique de chaque sel introduit dans la solution liquide par injection de composition saline entre ladite sortie de solution liquide et ladite entrée de solution liquide d'au moins un réacteur (52) de condensation.

14. - Procédé selon la revendication 13 **caractérisé en ce que** ledit ajustement comprend un asservissement du débit massique sur au moins une température mesurée.

15. - Procédé selon l'une quelconque des revendications 13 ou 14 **caractérisé en ce que** ladite composition saline est formée par solubilisation d'au moins un sel solide dans une fraction du débit de solution liquide comprenant la solution liquide délivrée par au moins un réacteur (52) de condensation.

## Patentansprüche

1. Thermochemische Wärmepumpe, umfassend:
- einen als Lösungsmittelverdampfer (26) bezeichneten Verdampfer, welcher umfasst:
-- einen Behälter (46) für flüchtiges flüssiges Lösungsmittel,
-- einen als Verdampfertauscher (49) bezeichneten Wärmetauscher, der so angepasst ist, dass er thermisch mit einer als warme Quelle (27) bezeichneten thermischen Quelle verknüpft werden kann, wobei der Verdampfertauscher einen Kreislauf umfasst, der einen mit dem Behälter für flüchtiges flüssiges Lösungsmittel verbundenen Einlass für flüchtiges flüssiges Lösungsmittel aufweist,
-- einen Auslass für Dampf des flüchtigen Lösungsmittels, wobei der Lösungsmittelverdampfer (26) so angepasst ist, dass er unter dem Einfluss von aus der warmen Quelle stammender Wärme einen Dampf des verdampften flüchtigen Lösungsmittels bereitstellen kann,
- eine Reaktionsvorrichtung (29), welche umfasst:
-- einen Einlass für Dampf des flüchtigen Lösungsmittels,
-- mindestens eine Quelle für eine als Salzzusammensetzung bezeichnete Zusammensetzung, die mindestens ein in dem flüchtigen flüssigen Lösungsmittel lösbares Salz enthält,
-- mindestens einen als Kühltauscher (81) bezeichneten Wärmetauscher, der so angepasst ist, dass er thermisch mit einer als kalte Quelle (31) bezeichneten thermischen Quelle verknüpft werden kann,
- wobei der Dampfauslass des Lösungsmittelverdampfers (26) mit dem Dampfeinlass der Reaktionsvorrichtung (29) verbunden ist,
- wobei die Reaktionsvorrichtung (29) so angepasst ist, dass sie eine Kondensation des Dampfes des flüchtigen Lösungsmittels und eine Absorption der Salzzusammensetzung bewirkt, um unter Erzeugung von Wärme, die durch den Kühltauscher (81) zur kalten Quelle (31) abgeführt wird, eine flüssige Lösung zu bilden,
wobei die Reaktionsvorrichtung (29) umfasst:
- mindestens einen als Kondensationsreaktor (52) bezeichneten Reaktor, welcher umfasst:
-- einen Einlass für flüssige Lösung, der mit einem Auslass für kalte flüssige Lösung des Kühltauschers verbunden ist,
-- einen Einlass für Dampf des flüchtigen Lösungsmittels,
-- einen Auslass für flüssige Lösung, der mit einem Einlass für warme flüssige Lösung des Kühltauschers (81) verbunden ist,
-- wobei dieser Kondensationsreaktor (52) so angepasst ist, dass er einen Kontakt des durch den Dampfeinlass eingespeisten Dampfes mit der kalten flüssigen Lösung, die dem Einlass für flüssige Lösung bereitgestellt wird, ermöglicht, um eine Kondensation des Dampfes und ein Vermischen des so durch Kondensation gebildeten flüchtigen flüssigen Lösungsmittels mit der kalten flüssigen Lösung zu bewirken, wobei die warme flüssige Lösung, die dem Auslass für flüssige Lösung des Kondensationsreaktors (52) bereitgestellt wird, aus dieser Vermischung resultiert,
- mindestens eine Einspritzung der Salzzusammensetzung zwischen dem Auslass für flüssige Lösung und dem Einlass für flüssige Lösung mindestens eines Kondensationsreaktors (52),
- eine Vorrichtung (67, 85) zum Einstellen des Massenstroms jedes durch mindestens eine Einspritzung der Salzzusammensetzung zwischen dem Auslass für flüssige Lösung und dem Einlass für flüssige Lösung mindestens eines Kondensationsreaktors (52) in die flüssige Lösung eingebrachten Salzes.

2. Thermochemische Wärmepumpe nach Anspruch 1, **dadurch gekennzeichnet, dass** sie als Quelle der Salzzusammensetzung mindestens einen Solubilisierungsreaktor (57) umfasst, der so angepasst ist, dass er das Solubilisieren mindestens eines festen Salzes der Salzzusammensetzung in einer ungesättigten flüssigen Lösung des flüssigen Lösungsmittels ermöglicht, wobei dieser Solubilisierungsreaktor (57) mindestens einen Auslass umfasst, der einen Strom konzentrierter flüssiger Lösung bereitstellt, die die Salzzusammensetzung bildet.

3. Thermochemische Wärmepumpe nach einem der Ansprüche 1 oder 2, **dadurch gekennzeichnet, dass** mindestens eine Einspritzung der Salzzusammensetzung mit mindestens einem Auslass eines Kondensationsreaktors (52) verbunden ist.

4. Thermochemische Wärmepumpe nach den Ansprüchen 2 und 3, **dadurch gekennzeichnet, dass** die Einspritzung der Salzzusammensetzung von einer Einspritzleitung (60) gebildet wird, die mindestens einen Auslass eines Solubilisierungsreaktors (57) mit einer als gemeinsame Leitung (61) bezeichneten Leitung verbindet, die mit dem Auslass für flüssige Lösung eines Kondensationsreaktors (52) verbunden ist.

5. Thermochemische Wärmepumpe nach Anspruch 4, **dadurch gekennzeichnet, dass** die gemeinsame Leitung (61) eine Pumpe (62) stromabwärts der Einspritzung der Salzzusammensetzung umfasst.

6. Thermochemische Wärmepumpe nach einem der Ansprüche 4 oder 5, **dadurch gekennzeichnet, dass** mindestens ein Solubilisierungsreaktor (57) einen Einlass für ungesättigte flüssige Lösung umfasst, der durch eine Speiseleitung (64) mit der gemeinsamen Leitung (61) verbunden ist, wobei die Speiseleitung (64) ein gesteuertes Ventil zum Einstellen des Stroms ungesättigter flüssiger Lösung, der diesem Einlass des Solubilisierungsreaktors (57) bereitgestellt wird, umfasst.

7. Thermochemische Wärmepumpe nach den Ansprüchen 5 und 6, **dadurch gekennzeichnet, dass** die Speiseleitung (64) des Solubilisierungsreaktors stromabwärts der Pumpe (62) mit der gemeinsamen Leitung (61) verbunden ist.

8. Thermochemische Wärmepumpe nach einem der Ansprüche 6 oder 7, **dadurch gekennzeichnet, dass** sie am Auslass jedes Kühltauschers (81) einen Sensor (53) für die Temperatur der kalten flüssigen Lösung umfasst, und dadurch, dass die Einstellvorrichtung (67, 85) so angepasst ist, dass sie den durch das gesteuerte Ventil (67) der Speiseleitung (64) mindestens eines Solubilisierungsreaktors (57) bereitgestellten Strom in Abhängigkeit von der von mindestens einem solchen Temperatursensor (53) gemessenen Temperatur der kalten flüssigen Lösung regelt.

9. Thermochemische Wärmepumpe nach einem der Ansprüche 4 bis 8, **dadurch gekennzeichnet, dass** die gemeinsame Leitung (61) durch eine Rezirkulationsleitung (63), die ein gesteuertes Ventil (66) zum Einstellen des Stroms warmer flüssiger Lösung, der diesem Kühltauscher (81) bereitgestellt wird, und damit des Stroms kalter flüssiger Lösung, der dem Einlass jedes Kondensationsreaktors (52), der mit dem Auslass für flüssige Lösung dieses Kühltauschers verbunden ist, bereitgestellt wird, mit dem Einlass für warme flüssige Lösung jedes Kühltauschers (81) verbunden ist.

10. Thermochemische Wärmepumpe nach den Ansprüchen 5 und 9, **dadurch gekennzeichnet, dass** die Rezirkulationsleitung (63) stromabwärts der Pumpe (62) mit der gemeinsamen Leitung (61) verbunden ist.

11. Thermochemische Wärmepumpe nach einem der Ansprüche 1 bis 10, **dadurch gekennzeichnet, dass** jeder Verdampfer, die Reaktionsvorrichtung (29), jede Leitung, in der der Dampf zirkuliert, und jede Leitung, in der eine flüssige Lösung zirkuliert, unter Vakuum dritter Gase stehen.

12. Thermochemische Wärmepumpe nach einem der Ansprüche 1 bis 11, **dadurch gekennzeichnet, dass** es sich bei dem flüchtigen flüssigen Lösungsmittel um Wasser handelt, und dadurch, dass die Salzzusammensetzung mindestens ein Salz umfasst, ausgewählt aus der Gruppe, die von ZnCl₂, NaOH, LiBr, ZnBr₂, KOH, LiCl, CaBr₂, LiI, CaCl₂, MgCl₂, NaI, Ca(NO₃)₂, Mg(NO₃)₂, NaBr, NH₄No₃, KI, SrCl₂, NaNO₃, NaCl, KCH₃CO₂, K₂CO₃, MnCl₂, NaNO₂ gebildet wird.

13. Verfahren zur Umverteilung von thermochemisch gespeicherter Wärmeenergie, umfassend:
- ein Verdampfen eines flüchtigen flüssigen Lösungsmittels durch Wärmeaustausch mit einer als warme Quelle (27) bezeichneten thermischen Quelle,
- eine Reaktion, die ein Kondensieren des Dampfes des flüchtigen Lösungsmittels und ein Absorbieren einer Salzzusammensetzung umfasst, um unter Erzeugung von Wärme, die durch Wärmeaustausch zu einer als kalte Quelle (31) bezeichneten thermischen Quelle abgeführt wird, eine flüssige Lösung zu bilden,
wobei die Reaktion in mindestens einem als Kondensationsreaktor (52) bezeichneten Reaktor erfolgt und umfasst:
- das Speisen eines Einlasses für flüssige Lösung des Kondensationsreaktors (52) mit einer kalten flüssigen Lösung aus einem Kühltauscher (81), der so angepasst ist, dass er thermisch mit der kalten Quelle (31) verknüpft werden kann,
- das Speisen des Kondensationsreaktors (52) mit einem aus der Verdampfung resultierenden Dampf des flüchtigen Lösungsmittels,
- das Speisen des Kühltauschers (81) mit einer warmen flüssigen Lösung, die durch einen Auslass für flüssige Lösung des Kondensationsreaktors (52) bereitgestellt wird,
- einen Kontakt des in den Kondensationsreaktor (52) eingespeisten Dampfes mit der in den Kondensationsreaktor (52) eingespeisten kalten flüssigen Lösung, um eine Kondensation des Dampfes und ein Vermischen des so durch Kondensation gebildeten flüchtigen flüssigen Lösungsmittels mit der kalten flüssigen Lösung zu bewirken, wobei die warme flüssige Lösung, die vom Kondensationsreaktor bereitgestellt wird, aus dieser Vermischung resultiert,
- das Einspritzen mindestens einer Salzzusammensetzung zwischen dem Auslass für flüssige Lösung und dem Einlass für flüssige Lösung mindestens eines Kondensationsreaktors (52),
- ein Einstellen des Massenstroms jedes durch Einspritzen der Salzzusammensetzung zwischen dem Auslass für flüssige Lösung und dem Einlass für flüssige Lösung mindestens eines Kondensationsreaktors (52) in die flüssige Lösung eingebrachten Salzes.

14. Verfahren nach Anspruch 13, **dadurch gekennzeichnet, dass** das Einstellen ein Regeln des Massenstroms anhand mindestens einer gemessenen Temperatur umfasst.

15. Verfahren nach einem der Ansprüche 13 oder 14, **dadurch gekennzeichnet, dass** die Salzzusammensetzung durch Solubilisieren mindestens eines festen Salzes in einer Fraktion des Stroms flüssiger Lösung gebildet wird, die die von mindestens einem Kondensationsreaktor (52) bereitgestellte flüssige Lösung umfasst.

## Claims

1. Thermochemical heat pump comprising:
- an evaporator, named solvent evaporator (26), comprising:
o a tank (46) of volatile liquid solvent,
o a heat exchanger, named evaporator exchanger (49), suitable for being thermally associated with a heat source, named hot source (27), said evaporator exchanger comprising a circuit having a volatile liquid solvent inlet connected to the volatile liquid solvent tank,
o a volatile solvent vapour outlet, said solvent evaporator (26) being suitable for delivering a vapour of the volatile solvent vaporized under the effect of heat coming from said hot source,
- a reaction device (29) comprising:
o a volatile solvent vapour inlet,
o at least one source of a composition, named saline composition, containing at least one salt that is soluble in said volatile liquid solvent,
o at least one heat exchanger, named cooling exchanger (81), suitable for being thermally associated with a heat source, named cold source (31),
- said vapour outlet from the solvent evaporator (26) being connected to said vapour inlet of the reaction device (29),
- the reaction device (29) being suitable for bringing about condensation of said volatile solvent vapour and absorption of said saline composition to form a liquid solution, with production of heat evacuated to the cold source (31) via said cooling exchanger (81),
said reaction device (29) comprising:
- at least one reactor, named condensation reactor (52), comprising:
o a liquid solution inlet connected to a cold liquid solution outlet of said cooling exchanger,
o a volatile solvent vapour inlet,
o a liquid solution outlet connected to a hot liquid solution inlet of said cooling exchanger (81),
o this condensation reactor (52) being suitable for enabling contact of the vapour fed by said vapour inlet with the cold liquid solution delivered to said liquid solution inlet, so as to bring about condensation of said vapour and mixing of the volatile liquid solvent thus formed by condensation with said cold liquid solution, the hot liquid solution delivered to the liquid solution outlet of the condensation reactor (52) resulting from this mixing,
- at least one injection of saline composition between said liquid solution outlet and said liquid solution inlet of at least one condensation reactor (52),
- a device (67, 85) for adjusting the mass flow of each salt introduced into the liquid solution by means of at least one injection of saline composition between said liquid solution outlet and said liquid solution inlet of at least one condensation reactor (52).

2. Thermochemical heat pump according to Claim 1, **characterized in that** it comprises, as a source of saline composition, at least one solubilization reactor (57) suitable for enabling the solubilization of at least one solid salt of said saline composition in an unsaturated liquid solution of said liquid solvent, this solubilization reactor (57) comprising at least one outlet delivering a flow of concentrated liquid solution forming said saline composition.

3. Thermochemical heat pump according to either one of Claims 1 and 2, **characterized in that** at least one injection of saline composition is connected to at least one outlet of a condensation reactor (52).

4. Thermochemical heat pump according to Claims 2 and 3, **characterized in that** said injection of saline composition is formed by an injection pipe (60) connecting at least one outlet of a solubilization reactor (57) to a pipe, named common pipe (61), connected to said liquid solution outlet of a condensation reactor (52).

5. Thermochemical heat pump according to Claim 4, **characterized in that** said common pipe (61) comprises a pump (62) downstream of said injection of saline composition.

6. Thermochemical heat pump according to either one of Claims 4 and 5, **characterized in that** at least one solubilization reactor (57) comprises an unsaturated liquid solution inlet connected via a feed pipe (64) to said common pipe (61), said feed pipe (64) comprising a controlled valve for adjusting the flow of unsaturated liquid solution delivered to this inlet of the solubilization reactor (57).

7. Thermochemical heat pump according to Claims 5 and 6, **characterized in that** the feed pipe (64) of the solubilization reactor is connected to the common pipe (61) downstream of said pump (62).

8. Thermochemical heat pump according to either of Claims 6 and 7, **characterized in that** it comprises a temperature sensor (53) for said cold liquid solution at the outlet of each cooling exchanger (81) and **in that** the adjustment device (67, 85) is suitable for locking the flow delivered by the controlled valve (67) of the feed pipe (64) of at least one solubilization reactor (57) as a function of the temperature of said cold liquid solution measured by at least one such temperature sensor(53).

9. Thermochemical heat pump according to one of Claims 4 to 8, **characterized in that** the common pipe (61) is connected to the hot liquid solution inlet of each cooling exchanger (81) via a recirculation pipe (63) comprising a controlled valve (66) for adjusting the flow of hot liquid solution delivered to this cooling exchanger (81), and thus the flow of cold liquid solution delivered to the inlet of each condensation reactor (52) connected to the liquid solution outlet of this cooling exchanger.

10. Thermochemical heat pump according to Claims 5 and 9, **characterized in that** said recirculation pipe (63) is connected to the common pipe (61) downstream of said pump (62).

11. Thermochemical heat pump according to one of Claims 1 to 10, **characterized in that** each evaporator, the reaction device (29), each pipe in which vapour circulates and each pipe in which a liquid solution circulates are at negative pressure under vacuum of intermediary gases.

12. Thermochemical heat pump according to one of Claims 1 to 11, **characterized in that** said volatile liquid solvent is water and **in that** said saline composition comprises at least one salt chosen from the group formed from ZnCl₂, NaOH, LiBr, ZnBr₂, KOH, LiCl, CaBr₂, Lil, CaCl₂, MgCl₂, NaI, Ca(NO₃)₂, Mg(NO₃)₂, NaBr, NH₄NO₃, KI, SrCl₂, NaNO₃, NaCl, KCH₃CO₂, K₂CO₃, MnCl₂, NaNO₂.

13. Process for redistributing thermochemically stored heat energy, comprising:
- an evaporation of a volatile liquid solvent, by heat exchange with a heat source, named hot source (27),
- a reaction comprising condensation of said volatile solvent vapour and absorption of a saline composition to form a liquid solution, with production of heat evacuated by heat exchange towards a heat source, named cold source (31),
the reaction being performed in at least one reactor, named condensation reactor (52), and comprises:
- feeding a liquid solution inlet of the condensation reactor (52) with a cold liquid solution coming from a cooling exchanger (81) suitable for being thermally associated with said cold source (31),
- feeding the condensation reactor (52) with a volatile solvent vapour resulting from said evaporation,
- feeding said cooling exchanger (81) with a hot liquid solution delivered by a liquid solution outlet of the condensation reactor (52),
- contacting the vapour fed into the condensation reactor (52) with the cold liquid solution fed into the condensation reactor (52), so as to bring about condensation of said vapour and mixing of the volatile liquid solvent thus formed by condensation with said cold liquid solution, the hot liquid solution delivered by the condensation reactor resulting from this mixing,
- injecting at least one saline composition between said liquid solution outlet and said liquid solution inlet of at least one condensation reactor (52),
- adjusting the mass flow of each salt introduced into the liquid solution by injection of saline composition between said liquid solution outlet and said liquid solution inlet of at least one condensation reactor (52).

14. Process according to Claim 13, **characterized in that** said adjustment comprises locking of the mass flow on at least one measured temperature.

15. Process according to either of Claims 13 and 14, **characterized in that** said saline composition is formed by solubilization of at least one solid salt in a fraction of the flow of liquid solution comprising the liquid solution delivered by at least one condensation reactor (52).
